# EUROPÄISCHE PATENTSCHRIFT

(11) **EP 0 880 572 B1**
(45) Veröffentlichungstag und Bekanntmachung des Hinweises auf die Patenterteilung: **13.06.2001**
(21) Anmeldenummer: 97901042.8
(22) Anmeldetag: 16.01.1997
(51) Int. Cl.: C10G 33/04, B01D 17/05, C08F 220/18

(54) **Verwendung von Demulgatoren**
Use of demulsifiers
Utilisation des demulsifiants

(30) Priorität: 02.02.1996 DE 19603696
(43) Veröffentlichungstag der Anmeldung: 02.12.1998
(73) Patentinhaber: Röhm GmbH & Co. KG, 64293 Darmstadt (DE)
(72) Erfinder: AUSCHRA, Clemens, D-79106 FREIBURG (DE); PENNEWISS, Horst, D-64289 Darmstadt (DE); BÖHMKE, Uwe, D-64289 Darmstadt (DE); NEUSIUS, Michael, D-64297 Darmstadt (DE)
(86) Internationale Anmeldenummer: EP9700176
(87) Internationale Veröffentlichungsnummer: WO9728234

(56) Entgegenhaltungen:
- EP-A- 0 691 355
- EP-A- 0 696 631
- DE-A- 4 326 772
- DE-C- 3 513 550
- US-A- 3 001 942

## Beschreibung

### Gebiet der Erfindung

Die Erfindung betrifft die Verwendung von Demulgatoren auf der Basis von Polyalkyl(meth)acrylat (PAMA)-Oligomeren/Polymeren.

### Stand der Technik

Als Demulgatoren ("Demulsifiers") im allgemeinsten Sinn werden Agentien bezeichnet, die Emulsionen zerstören. Ihre Wirkweise wird beispielhaft so beschrieben, daß sie den existierenden Grenzflächenfilm verändern und dadurch das Zusammenfließen der dispersen Phase (Koaleszenz) bewirken (vgl. Winnacker-Küchler 4. Aufl., Bd. 7, 95 C. Hanser 1986). Daher kommen bestimmte Tensidgruppen infolge ihrer Grenzflächenwirkung als Demulgatoren zum Einsatz, z. B. Blockcopolymerisate. Technische Einsatzgebiete für Demulgatoren ergeben sich beispielsweise bei der Erdölaufbereitung und in Hydraulikflüssigkeiten (vgl. Ullmann's Encyclopedia of Industrial Chemistry 5th Ed. Vol. A13, 169, VCH 1989; Surfactants Science Series Bd. 13, K. J. Lissant Ed. Demulsification, M. Dekker 1983).

DE 39 06 702 (Th. Goldschmidt AG) beschreibt Polyacrylate, die mit Alkoxylaten nachträglich modifiziert werden. Sie werden als W/O-Emulgatoren verwendet. Polymethacrylate werden nicht erwähnt. Eine Anwendung der Produkte als Demulgatoren wird nicht erwähnt.

DE 44 23 358 (Röhm GmbH) beschreibt dispergierende PAMA-Oligomere mit alkoxylierten Methacrylaten für die Hauptanwendung als dispergierendes Additiv für Schmieröle, insbesondere für Motoröle, sogenannte ashless dispersants. Diese Verbindungen besetzen erfahrungsgemäß eine eher demulgierschädliche Wirkung. Aus der Praxis der Additivherstellung ist allgemein bekannt, daß Verunreinigungen mit dispergierenden Additiven die Demulgierwirkung von Hydraulikölen stark beeinträchtigt.

Von den in der DE 44 23 358 beschriebenen dispergierenden Additiven kann also nicht auf Demulgiereigenschaften geschlossen werden.

Im Houben/Weyl, Bd. I, S. 219 (1958) ist die allgemeine Erkenntnis niedergelegt, daß praktisch jeder Emulgator auch als Demulgator verwendet werden kann. Diese allgemeine Erkenntnis ist aber nicht auf die komplizierten Verhältnisse bei Mineralölen übertragbar. Die Zahl der zu untersuchenden Verbindungen ist unüberschaubar groß, so daß aus der allgemeinen Literatur keine gezielten Hinweise zur erfindungsgemäßen Lösung ableitbar sind.

### Aufgabe und Lösung

Der Zusatz von Demulgatoren als Additive in Hydraulikflüssigkeiten auf Mineralölbasis dient der Trennung von Öl und Wasser. Die angewendeten Additive werden als "lonogenic and non-ionogenic polar compounds" klassifiziert, ihre Wirkung als Interaction mit der Öl-Wasser-Trennfläche beschrieben.

Demulgatoren stellen allerdings nur einen kleinen Teil der in Hydraulikflüssigkeiten im Durchschnitt vorhandenen Additive (vgl. Ullmann's Encyclopedia, Vol. A13, loc. cit.). Die Forderung nach einer schnellen Abscheidung des Wassers stellt sich bei Hydraulikflüssigkeiten besonders dringlich.

Aufgrund des komplexen Zusammenspiels der verschiedenen Additivkomponenten in den Formulierungen und aufgrund des zum Teil massiven Einflusses von Spurenverunreinigungen ist diese Forderung nicht leicht zu erfüllen. Andererseits kommt ein Einsatz bestimmter Substanzen vom Typ der ionogenen oder nicht-ionogenen polaren Verbindungen in Hydraulikflüssigkeiten nur infrage, wenn die Bestandteile untereinander hinreichend verträglich sind. Verständlicherweise sind Unverträglichkeitserscheinungen um so weniger zu erwarten, je geringer die Konzentration einzelner Additive ist.

Dispergierwirksame PAMA-Oligomere mit alkoxylierten Methacrylsäure-Esterresten sind in der (unveröffentlichten) deutschen Patentanmeldung P 44 23 258.2 beschrieben. Darin werden Oligomere mit bis zu 40 Gew.-% an alkoxyliertem Comonomer beansprucht. Für das in der deutschen Patentanmeldung beschriebene Hauptanwendungsgebiet als "Ashless Dispersant" für Motorenöle liegen die bevorzugten Zusammensetzungen bei ca. 10 - 25 Gew.-% an alkoxyliertem Comonomer. Eine Anwendung als Demulgatoren ist in der genannten Anmeldung nicht vorgesehen und konnte nach Maßgabe der Fakten auch nicht erwartet werden.

Der vorliegenden Erfindung liegt die Erkenntnis zugrunde, daß sich Polyalkyl(meth)acrylat (PAMA)-Oligomere bzw. Polymere mit alkoxylierten Alkylesterresten sehr gut als Demulgatoren eignen.

Die als geeignet befundene Klasse von Cooligomeren/Copolymeren CNP im Molekulargewichtsbereich 1 000 bis 300 000 g/mol sind aufgebaut aus
A) 10 bis 95 vorzugsweise 40 bis 70, insbesondere 40 bis kleiner 60 Gew.-% (Meth)acrylsäureester der Formel I 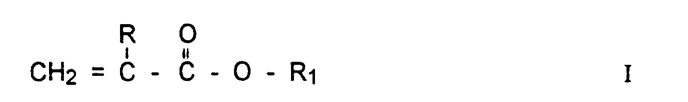 worin
   - R: für Wasserstoff oder Methyl und R₁ für einen gegebenenfalls verzweigten Alkylrest mit 1 bis 32 Kohlenstoffatomen steht.
B) 5 bis 90 vorzugsweise 30 bis 60, insbesondere größer 40 bis 50 Gew.-% (Meth)acrylsäureester der Formel II 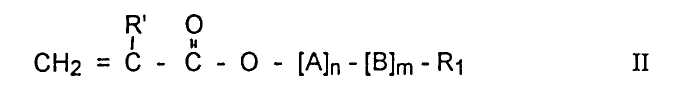 worin
   - R': für Wasserstoff oder Methyl steht und
   worin A und B ausgewählt sind aus der Gruppe bestehend aus
   a)-CH₂CH₂-O-; b) 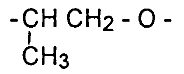 und c) 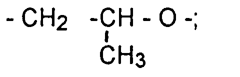 mit der Maßgabe, daß n + m eine Zahl von mindestens 3 und bis 200 bedeutet und daß die Summe von n + m für jedes einzelne Gruppenmitglied a), b) oder c) 100 nicht übersteigt worin
   - R₁: für einen gegebenenfalls verzweigten Alkylrest, einen Cycloalkylrest einen Aryl- oder einen Aralkylrest mit 1 bis 50 vorzugsweise 1 - 25 Kohlenstoffatomen steht und
C) 0 bis 40 Gew.-% vorzugsweise 0 bis kleiner 20 Gew.-% eines 1-Alkens mit 4 bis 32 vorzugsweise 4 bis 20 Kohlenstoffatomen.
   Als neue Vertreter der unter CNP fallenden Polymere seien die mit Anteilen von 10 bis < 60 Gew.-% (Meth)acrylsäureester der Formel I in A) und entsprechend von 90 bis > 40 Gew.-% der Ester der Formel II in B) und ggfls. einem komplementären Gehalt an Komonente C) genannt (Copolymere CNP')

Die Komponenten A), B) und C) ergänzen sich in der Regel zu 100 Gew.-%.
Sofern
- R₁: für einen Cycloalkylrest steht, handelt es sich vorzugsweise um einen 5 bis 8-Ring, insbesondere einen Cyclohexylrest.

Unter einem Arylrest sei insbesondere ein Phenyl- oder Naphthylrest, unter einem Aralkylrest sei insbesondere ein Phenalkyl- bzw. ein Naphthalkylrest, die ihrerseits alkoxyliert sein können, verstanden.

### Die Cooligomeren und Copolymere CNP

Die Molekulargewichte (M_{w}) der Cooligomeren und Copolymeren liegen im Bereich 1 000 bis 300 000 g/mol, insbesondere im Bereich 3 000 bis 30 000 g/mol (Bestimmung durch Gelpermeationschromatographie, s. H.F. Mark et al. Encyclopedia of Polymer Science and Technology, Vol. 10, 1 - 19, J. Wiley 1987; J.V. Dawkins Comprehensive Polymer Science, Vol. 1, 231 (1989), Pergamon Press).

Als Monomeren der Formel I kommen besonders (Meth)acrylsäureester von Gemischen höherer Alkohole, insbesondere aus dem Bereich C₉ bis C₂₀, insbesondere C₁₀ bis C₁₈ mit wechselnden Verzweigungsgraden im Bereich 25 bis über 80 %, z. B. solche, die aus den großtechnischen Herstellungsverfahren wie der Oxosynthese anfallen, in Betracht.

Genannt seien z. B. die Ester der sogenannten DOBANOL®-Alkohole (Produkte der Fa. Shell), der sogenannten ALFOL®-Alkohole (Produkte der Fa. Condea), der sogenannten LOROL®-Alkohole, der Talgfettalkohole u. ä.

Von besonderem Interesse sind z. B. Ester von Alkoholgemischen aus isomeren lsodecylalkoholen, Estern von Alkoholgemischen aus isomeren Isoundecylalkoholen ferner Ester eines Alkoholgemischs mit Durchschnitts-C-Zahl 13,2 - 13,8 und einem überwiegenden Gehalt an C₁₂-C₁₅-Alkoholen (DOBANOL® 25L). Gut brauchbar sind wie erwähnt auch die Ester von cyclischen Alkoholen z. B. mit 5 bis 8 Ringkohlenstoffatomen, wie z. B. von Cyclopentanol, Cyclohexanol, Cyclooctanol, Benzylalkohol, alkylsubstituierte Cyclohexanole wie z. B. 4-tert-Butylcyclohexanol,

Die (Meth)acrylsäureester der Formel II können aus einem einzigen Gruppenmitglied [A = a), n = 3 - 100, m = 0] oder aus mehreren gleichzeitig aufgebaut sein.

Als Verbindungen der Formel II kommen somit z. B. die (Meth)acrylsäureester von alkoxylierten aliphatischen Alkoholen, wie z. B. alkoxyliertem Butanol und weitere alkoxylierte Alkohole ausgehend von: Methanol, Ethanol, Propanol, Pentanol (+ Isomere), Hexanol (+ Isomere), Cyclohexanol, Methylcyclohexanol, 2-Ethylhexanol und höheren aliphatischen einwertigen Alkoholen wie Isodecylalkohol, Isoundecylalkohol, Isotridecylalkohol, aus natürlichen Rohstoffen hergestellte Fettalkohole usw. infrage.

Desweiteren kommen infrage: alkoxylierte Phenole z. B. basierend auf: Phenol, alkylsubstituierten Phenolen, z. B. t-Butylphenol, 2,6-Dimethylphenol, isomere Gemische techn. Alkylphenole, z. B. Octylphenol, Nonylphenol, Dinonylphenol, Naphthol, alkylsubstituierte Naphthole, weiter kommen infrage EO/PO-Anlagerungsprodukte an substituierte Alkohole z. B.: Furfurol, Tetrahydrofurfurol, 2-Methoxybutanol, 3-Methoxybutanol, 2-Dimethylaminoethanol, 2-Diethylaminoethanol, 1-Dimethylamino-2-propanol, 3-Dimethylamino-1-propanol, 2-Morpholinoethanol, 2-(2-Pyridyl)ethanol, N-(2-Hydroxyethyl)-piperidin, N-(2-Hydroxyethyl)pyrrolidin, N-(2-Hydroxyethyl)-pyrrolidon.

Wie durch die Formel II zum Ausdruck gebracht wird, können gemischte EO/PO-Addukte sowohl blockartig als auch statistisch verteilt vorliegen.

Genannt seien z. B. Alkohole, die ein statistisches oder blockartiges Anlagerungsprodukt von Ethylenoxid und Propylenoxid an einen Alkohol wie z. B. Butanol darstellen. Als Anhalt für das Molekulargewicht von bevorzugten Monomeren der Formel II sei der Bereich um ca. 2 000 g/mol angegeben. Dies stellt jedoch keine Limitierung dar. Je nach Alkoxylierungsgrad (n + m, Formel II) und je nach Größe des Restes R₂ können auch höhere Molekulargewichte bis ca. 5 000 g/mol erreicht werden. Die Monomeren der Formel II können selbst als Mischung bestehend aus Methacrylaten der verschiedenen oben beschriebenen alkoxylierten Alkohole vorliegen.

Die Monomeren der Formel III, stellen die radikalisch polymerisierbaren 1-Alkene mit 4 bis 32 Kohlenstoffatomen dar. Genannt seien insbesondere die C₄-C₁₆-Alkene, zum Beispiel das 1-Decen, 1-Octen, 1-Dodecen, 1-Tetradecen, 1-Hexadecen und auch 1-Octadecen, 1-Eicosen.

Die Herstellung der demulgierwirksamen Oligomeren (CNP) wird nach den Regeln und Erfahrungen der Radikalpolymerisation vorgenommen (vgl. C.H. Bamford, Encyclopedia of Polymer Science, Vol. 13, 708, 2nd. Ed. (1988)).

Vorzugsweise erfolgt die Polymerisation in Form einer Lösungspolymerisation in einem geeigneten organischen Lösungsmittel L. Beim Lösungsmittel L kann es sich demnach handeln:
a) um ein hochsiedendes inertes Lösungsmittel wie z. B. Decahydronaphtalin (Decalin® , KP > 180 °C), Dodecylbenzol (KP > 275 °C), tert.-Butylbenzol (KP = 169 °C), Dodecan (KP = 216 °C), Esteröle wie z. B. Di-2-ethylhexyladipat (Vestinol OA, Hüls), Mineralöle wie z. B. Shell SM 920, aromatenreiche Öle wie z. B. Shellsol AB oder
b) vorteilhafterweise um Lösungsmittel, die bei radikalischen Polymerisationen bekanntermaßen eine das Molekulargewicht regelnde Wirkung besitzen, wie z. B. 1,2,3,4-Tetrahydronaphthalin (Tetralin, KP = 207 °C), Cycloocten (KP = 144 °C), technisches Dipenten (= Gemisch von Terpenkohlenwasserstoffen KP > 170 °C) oder um Lösungsmittelgemische aus den unter a) und b) aufgeführten Komponenten oder
c) vorteilhafterweise kann anstelle des organischen Lösungsmittel L auch das Produkt selbst (d. h. CNP) oder ein anderes CNP' mit verschiedener chemischer Zusammensetzung und anderem Molekulargewicht eingesetzt werden. In diesem Fall erübrigt sich zum einen das Abdestillieren des Lösungsmittels L, und zum anderen können Mischungen von demulgierenden Oligomeren mit sich ergänzender Wirkung direkt hergestellt werden.

Als Initiatoren kommen an sich bekannte, insbesondere organische Radikalinitiatoren IN, vorzugsweise mit einer Zerfallstemperatur bei normierten Halbwertszeitbedingungen im Bereich 90 - 130 °C (vgl. H. Logemann in Houben-Weyl, Methoden der Organ. Chemie, 4. Aufl., Bd. XIV/I, S. 248, Georg Thieme (1961); Brandrup-Immergut, Polymer Handbook 3rd Ed., II-1, J. Wiley 1989) beispielsweise aus der Gruppe der organ. Peroxyverbindungen, insbesondere mit tertiären Alkylresten, beispielsweise des 2,2-Bis(tert.Butyl-peroxy)butan, tert-Butylperbenzoat, Ditert-Butylperoxid, Cumolhydroperoxid u. ä. infrage.

In der Regel werden die Initiatoren in Mengen von ca. 0,01 bis 3 Gew.-% bezogen auf die Monomeren eingesetzt. Die Polymerisationstemperaturen liegen im allgemeinen oberhalb 90 °C und bis ca. 160 °C, vorteilhaft bei ca. 110 °C.

Desweiteren vorteilhaft ist die Mitverwendung von gängigen Reglern der radikalischen Polymerisation, insbesondere Schwefelregler wie z. B. Dodecylmermercaptan in Anteilen von 0 bis 4 % bezogen auf die Gesamtmenge an eingesetztem Monomer.

Im einzelnen kann so verfahren werden, daß man in einem geeigneten Reaktor, beispielsweise einem mit Gaseinlaß, Rührvorrichtungen, Destillationsaufsatz und Thermometer ausgestatteten Dreihalskolben vorzugsweise unter einem Schutzgas wie Stickstoff, das auf Polymerisationstemperatur - beispielsweise auf 110 °C - vorgewärmte Lösungsmittel L und einem Teil des Monomergemisches vorlegt und das restliche Monomergemisch zusammen mit Initiator über einen gewissen Zeitraum - beispielsweise während 3,5 Stunden kontinuierlich zudosiert. Nach Zulaufende wird bei Polymerisationstemperatur beispielsweise bei 110 °C ein oder zwei mal Initiator zudosiert.
Nachdem die Reaktionsmischung weitere 4 Stunden bei einer Temperatur von 110 °C gehalten wurde, ist die Herstellung beendet. Es entstehen klare Lösungen der Oligomere im Lösungsmittel L.

### Vorteilhafte Wirkungen

Die erfindungsgemäßen Cooligomeren und Copolymeren CNP besitzen hervorragende Wirkung als Demulgatoren, insbesondere im Bereich Schmierstoffe. Während im Einsatzgebiet als "Ashless Dispersants" in Motorenölen Zugabemengen im Bereich von ca. 0,5 - 8 Gew.-% an Cooligomeren/Copolymeren CNP typisch sind, liegen die erfindungsgemäßen Einsatzkonzentrationen als Demulgatoren sehr viel niedriger, typischerweise im Bereich 50 - 1 000 ppm bezogen auf die Formulierung.

Bei dem Hauptanwendungsgebiet "Ashless Dispersants" für Motorenölen (wie in P 44 23 358.2 beschrieben) liegen die technisch interessantesten Zusammensetzungen der Cooligomeren/Copolymeren bei 10 - 25 Gew.-% an alkoxyliertem Comonomer (Verbindungen der Formel II). Bei der erfindungsgemäßen Anwendung als Demulgatoren ergibt sich nach bisher vorliegenden Ergebnissen die beste Wirksamkeit bei höheren Anteilen an alkoxylierten Comonomeren, d. h. bei 30 - 60 Gew.-%, insbesondere bei 40 - 50 Gew.-% Anteil.

Die erfindungsgemäßen Demulgatoren zeigen schon in den genannten, sehr geringen Anwendungskonzentrationen unerwartet gute Wirkung. Hervorzuheben ist auch ihre gute Kompatibilität mit weiteren Additivkomponenten in den Schmierstoffen.

Es empfiehlt sich insbesondere die neuen Demulgatoren als interne Hilfsstoffe verschiedenen, üblicherweise angewendeten Additiven zuzusetzen wie z. B. VI-Verbesserern und Fließpunktverbesserern (PPD).

Ferner ergibt sich die Möglichkeit derartige Demulgatoren den DI-Paketen des Handels oder den Grundölen selbst zuzusetzen, oder auch als separates Additiv bei der Herstellung von Schmieröl- oder Hydraulikölformulierungen zu verwenden. Nach bisher vorliegenden Erfahrungen, beispielsweise in Hydraulikformulierungen zeigt sich in derart additivierten Formulierungen keine Beeinträchtigung von anderen, anwendungstechnisch bedeutsamen Eigenschaften.

Es ist somit zu erwarten, daß sich die erfindungsgemäßen Oligomere/ Polymeren CNP auf der ganzen Breite der Einsatzgebiete von Demulgatoren als brauchbar erweisen, z. B. auch als "Spalter" bei der Erdölförderung.

Die folgenden Beispiele dienen zur Erläuterung der Erfindung. Die Bestimmung der aktuellen Viskosität KV wird nach ASTM D 445, die Bestimmung der spezifischen Viskosität η_{spez/c} nach DIN 51562 vorgenommen.
Das Demulgiervermögen wird durch ASTM D 1401 definiert.

### BEISPIELE

Materialien:
- Ester I-A:: Methacrylat des Alkohols Dobanol® 25 L (Fa. Shell, Gemisch aus C11 bis C16-Alkoholen)
- Ester II-A:: Methacrylat von ethoxyliertem Tridecylalkohol mit Ethoxylierungsgrad 20.
- Ester II-B:: Methacrylat von ethoxyliertem Nonylphenol mit Ethoxylierungsgrad 10
- Ester I-B:: Butylmethacrylat
- Ester I-C:: Methylmethacrylat
- Initiator A:: tert-Butylper-2-ethylhexanoat)
- Initiator B:: 2,2-Bis-(tertbutylperoxy)butan 50 %ig in Aliphaten
- Shellsol® AB:: aromatenreiches Öl (Produkt der Fa. Shell)
- Vestinol® OA:: Esteröl Di-2-ethylhexyladipat (Produkt der Hüls AG)
1-Decen
Tetralin

### Beispiele 1 bis 4

Allgemeine Arbeitsvorschrift zur Herstellung von 50 %igen PAMA-Oligomeren CNP in Mineralöl oder Syntheseölen (PAO, Esteröl) als Zulaufpolymerisation:
In einer Polymerisationsapparatur bestehend aus Dreihalskolben mit Ölbadheizung, Säbelrührer, Innenthermometer, N₂-Überleitung und Rückflußkühler werden vorgelegt:

| | |
|---|---|
| 125 g | Lösungsmittel |
| 13,89 g | Monomermischung |
| 0,56 g | Dodecylmercaptan (Regler) |

und auf die Polymerisationstemperatur von 110 °C erwärmt. Nach Zugabe von 0,15 g Initiator A wird innerhalb von 3,5 h eine Mischung bestehend aus:

| | |
|---|---|
| 111,11 g | Monomermischung |
| 4,44 g | Dodecylmercaptan |
| 2,22 g | Initiator A |

innerhalb von 3,5 h kontinuierlich zugepumpt. 2 h und 4 h nach Zulaufende werden jeweils 0,25 g Dodecylmercaptan und 1,25 g Initiator A zugegeben und danach noch 4 h bei Polymerisationstemperatur gehalten. Ausbeute: 250 g an 50 %igen PAMA-Oligomeren CNP als klare Lösungen.

Durch Variation der Zusammensetzung der Monomermischung wie in Spalte 2 von Tabelle 1 angegeben, wurden die 50 %igen PMMA-Oligomere Bsp. 1 bis Bsp. 4 hergestellt.

### Beispiel 5

Herstellung eines 100 %igen Oligomeren in Tetralin/Decen-Gemisch: In einer Apparatur wie in Bsp. 1 werden 133,3 g Tetralin vorgelegt und unter N₂ auf 140 °C erwärmt.
Zum heißen Lösungsmittel wird innerhalb von 5 h eine Mischung aus:

| | |
|---|---|
| 75,0 g | Ester I-A |
| 66,7 g | Ester II-B |
| 58,4 g | Decen |
| 2,0 g | Initiator B |

kontinuierlich zugepumpt. 30 min. nach Zulaufende werden 12 mal jeweils im Abstand von 30 min. je 0,25 ml Initiator B nachgegeben. 60 min. nach der letzten Zugabe wird das Tetralin und das nichtreagierte Decen im Vakuum bis zu einer Sumpftemperatur von 162 °C abdestilliert. Ausbeute: 155 g Oligomer CNP der Zusammensetzung wie in Tabelle 1 angegeben.

Aktuelle Viskosität: KV (100 °C) = 45,25 mm²/s, KV (40 °C) = 262 mm²/s

Tabelle 1 gibt die Zusammensetzung der Oligomeren sowie die spezifische Viskosität η_{sp/c} als Maß für das Molekulargewicht.

| Bsp. | Zusammensetzung der Monomermischung bzw. des Oligomeren [Gew.-%] | Polymerisationstemperatur [°C] | Lösungsmittel zur Herstellung | Konzentration des Additivs [%] | η_{sp/c} in CHCl₃ bei 25 °C [ml/g] |
|---|---|---|---|---|---|
| 1 | Ester I-B - Ester II-A 60 - 40 | 110 | Shellsol AB | 50 | 11,6 |
| 2 | Ester I-B - Ester II-A 50 - 50 | 110 | Shellsol AB | 50 | 12,6 |
| 3 | Ester I-B - Ester II-A 50 - 50 | 110 | Vestinol OA | 50 | 15,4 |
| 4 | Ester I-C - Ester I-A - Ester II-A 26,7 - 23,3 - 50 | 95 | Vestinol OA | 50 | 16,3 |
| 5 | Ester I-A - Ester II-B - Decen 49,5-44,0-6,5 *) | 140 | Tetralin / Decen | 100 | |

| | | | | | |
|---|---|---|---|---|---|
| *) bei der angegebenen Zusammensetzung handelt es sich um die Zusammensetzung des 100 %igen Endproduktes. | | | | | |

Die Wirksamkeit der neuen Demulgatoren wird mit Hilfe des Demlgiertestes nach ASTM D 1401 an Modellformulierungen von VI-Verbesserern in 150 N-Öl demonstriert.

Zusammensetzung der Grundformulierungen A, B und C: (Gew.-%)

| | |
|---|---|
| 90 % | 150 N-ÖI |
| 10 % | PMMA-VI-Verbesserer I (Mw = 100 000) |

Die Grundformulierungen A, B und C wurden mit unterschiedlichen Chargen an 150 N-ÖI und an VI-Verbesserer aufgemischt. Die drei Grundformulierungen erfüllen nicht die Demulgieranforderung nach ASTM 1401 (siehe Tabelle 2).

**Tabelle 2**

| Demulgator | Zugabe von Demulgator (bez. auf die Grundformulierung) [ppm] | Demulgierung^{#})ASTM D 1401 [Öl / Wasser / Emulsion / Zeit] [ml / ml / ml / min] |
|---|---|---|
| Grundformulierung A: | | |
| - | 0 | 2 / 0 / 78 / 30' |
| Bsp. 1 | 200 | 42 / 38 / 0 / 15' |
| Bsp.2 | 200 | 41 / 39 / 0 / 15' |

| Grundformulierung B: | | |
|---|---|---|
| - | 0 | 2 / 3 / 75 / 30' |
| Bsp. 3 | 200 | 41 / 39 / 0 / 10' |
| Bsp. 4 | 200 | 41 / 39 / 0 / 15' |

| Grundformulierung C: | | |
|---|---|---|
| - | 0 | 3 / 7 / 70 / 30' |
| Bsp. 5 | 200 | 41 / 39 / 0 25' |

| | | |
|---|---|---|
| ^{#}) Der Test wird bestanden, wenn in ≤ 30' die Emulsion auftrennt, d. h. weniger als 3 ml Restemulsion bleiben. | | |

Tabelle 2 zeigt, daß durch Zusatz von 200 ppm der Oligomere CNP zu verschiedenen schlecht demulgierenden Grundformulierungen in jedem Fall der Demulgiertest bestanden wird.

Zusammensetzung der vollen ISO HV46-Hydraulikölformulierung D:

| | |
|---|---|
| 30,0 % | 90 N-Öl |
| 59,9 % | 150 N-Öl |
| 9,4 % | PMMA-VI-Verbesserer II (Mw = 160 000) |
| 0,7 % | Hydraulik-Dl-Paket |

Die Hydraulikölformulierung D erfüllt nicht die Demulgieranforderung nach ASTM 1401.

**Tabelle 3**

| Demulgator | Zugabe von Demulgator (bez. auf die Grundformulierung) [ppm] | Demulgierung^{#}) ASTM D 1401 [Öl / Wasser / Emulsion / Zeit] [ml / ml / ml / min] |
|---|---|---|
| Formulierung D: | | |
| - | 0 | 36 / 6 / 38 / 30' |
| Bsp. 3 | 200 | 40 / 40 / 0 10' |
| Bsp. 4 | 200 | 40 / 40 / 0 / 15' |

Tabelle 3 zeigt, daß auch im komplexen System einer vollen Hydraulikölformulierung die Oligomere CNP gute Wirkung besitzen.

## Patentansprüche

1. Verwendung von Polyalkyl(meth)acrylat-Cooligomeren oder Copolymeren, wobei die Cooligomeren oder Copolymeren CNP aufgebaut sind aus
A) 10 bis 95 Gew.-% (Meth)acrylsäureester der Formel I 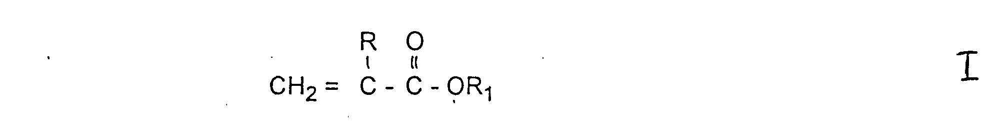 worin
R für Wasserstoff oder Methyl und
R₁ für einen gegebenenfalls verzweigten Alkylrest mit 1 bis 32 Kohlenstoffatomen steht,
B) 5 bis 90 Gew.-% (Meth)acrylsäureester der Formel II 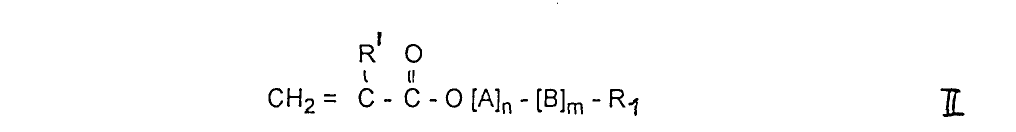 worin R' für Wasserstoff oder Methyl steht und worin A und B ausgewählt sind aus der Gruppe bestehend aus
a) - CH₂ CH₂-O, b) 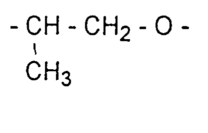
c) 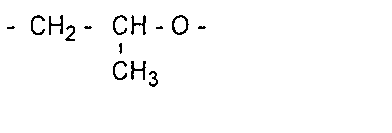 mit der Maßgabe, daß n + m eine Zahl von 3 bis 200 bedeutet und daß die Summe von n + m für jedes einzelne Gruppenmitglied a), b) oder c) die Zahl 100 nicht überschreitet
und
R₁ für einen, gegebenenfalls verzweigten Aikylrest einen Cycloalkylrest, einen Arylrest oder einen Alkarylrest mit 1 bis 50 Kohlenstoffatomen steht.
C) 0 bis 40 Gew.-% eines 1-Alkens mit 4 bis 32 Kohlenstoffatomen, wobei sich die Komponenten A), B) und C) zu 100 Gew.-% ergänzen, die demulgierwirksamen Oligomeren (CNP) durch Radikalpolymerisation hergestellt werden und das Molekulargewicht (M_{w}) zwischen 1000 bis 300 000 g/mol liegt, als Demulgatoren für Hydraulikflüssigkeiten auf Mineralölbasis.

2. Verwendung von Cooligomeren oder Copolymeren CNP; die aufgebaut sind aus
A) 10 bis kleiner 60 Gew.-% (Meth)acrylsäureester der Formel I 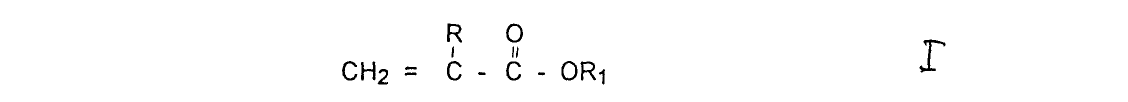 worin
R für Wasserstoff oder Methyl und
R₁ für einen gegebenenfalls verzweigten Alkylrest mit 1 bis 32 Kohlenstoffatomen steht.
B) größer 40 bis 90 Gew.-% (Meth)acrylsäureester der Formel II 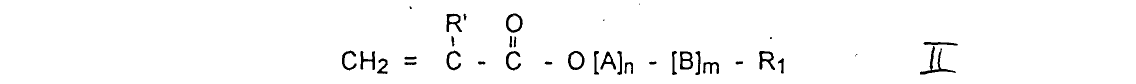 worin R' für Wasserstoff oder Methyl steht und
worin A und B ausgewählt sind aus der Gruppe bestehend aus 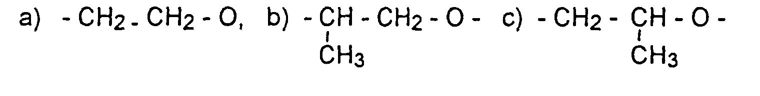 mit der Maßgabe, daß n + m eine Zahl von 3 bis 200 bedeutet und daß die Summe von n + m für jedes einzelne Gruppenmitglied a), b) oder c) die Zahl 100 nicht überschreitet und R₁ für einen, gegebenenfalls verzweigten Alkylrest einen Cycloalkylrest, einen Arylrest oder einen Alkarylrest mit 1 bis 50 Kohlenstoffatomen steht.
C) 0 bis kleiner 20 Gew.-% eines 1-Alkens mit 4 bis 32 Kohlenstoffatomen,
mit der Maßgabe, daß sich die Komponenten A) + B) + C) zu 100 Gew.-% ergänzen, die demulgier wirksamen Oligomeren CNP' durch Radikalpolymerisation hergestellt werden und das Molekulargewicht (M_{w}) zwischen 1000 bis 300 000 g/mol liegt, als Demulgatoren für Hydraulikflüssigkeiten auf Mineralölbasis.

3. Verwendung der Cooligomeren oder Copolymeren CNP gemäß Anspruch 1 als Demulgatoren in Anwendungskonzentrationen im Bereich 50 bis 1 000 ppm.

4. Verwendung der Cooligomeren oder Copolymeren CNP' gemäß Anspruch 2 als Demulgatoren in Anwendungskonzentrationen im Bereich 50 bis 1 000 ppm.

## Claims

1. Use of polyalkyl(meth)acrylate cooligomers or copolymers, wherein the cooligomers or copolymers are synthesised from
A) 10 to 95 wt.% of (meth)acrylic acid ester of formula I 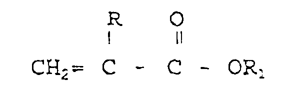 wherein
R denotes hydrogen or methyl and
R₁ denotes an optionally branched alkyl group having 1 to 32 carbon atoms,
B) 5 to 90 wt.% of (meth)acrylic acid ester of formula II 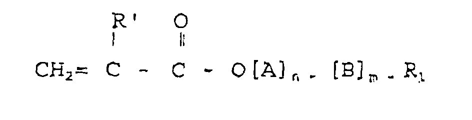 wherein R' denotes hydrogen or methyl and wherein A and B are selected from among the groups 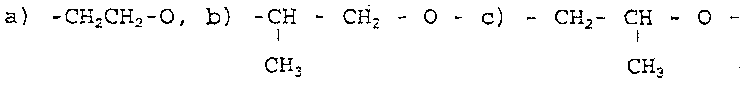 with the proviso that n + m denote a number from 3 to 200 and that the sum of n + m for each individual group member a), b) or c) does not exceed the number 100
and
R₁ denotes an optionally branched alkyl group, a cycloalkyl group, an aryl group or an alkaryl group having 1 to 50 carbon atoms,
C) 0 to 40 wt.% of a 1-alkene having 4 to 32 carbon atoms,
wherein the components A), B) and C) add up to 100 wt.%, the demulsifying oligomers (CNP) are prepared by radical polymerisation and the molecular weight (M_{w}) is between 1,000 and 300,000 g/mol, as demulsifiers for hydraulic liquids based on mineral oil.

2. Use of cooligomers or copolymers CNP which are synthesised from
A) 10 to less than 60 wt.% of (meth)acrylic acid ester of formula I 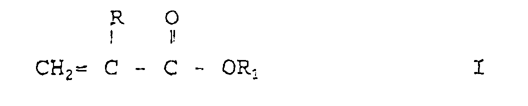 wherein
R denotes hydrogen or methyl and
R₁ denotes an optionally branched alkyl group having 1 to 32 carbon atoms,
B) more than 40 up to 90 wt.% of (meth)acrylic acid ester of formula II 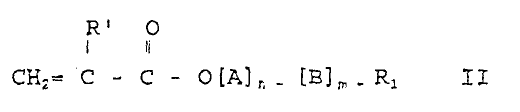 wherein R' denotes hydrogen or methyl and wherein A and B are selected from among a) -CH₂CH₂-O, b) 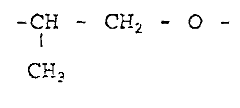 c) 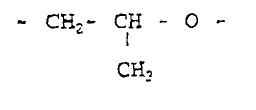 with the proviso that n + m denote a number from 3 to 200 and that the sum of n + m for each individual group member a), b) or c) does not exceed the number 100
and
R₁ denotes an optionally branched alkyl group, a cycloalkyl group, an aryl group or an alkaryl group having 1 to 50 carbon atoms,
C) 0 to less than 20 wt.% of a 1-alkene having 4 to 32 carbon atoms,
with the proviso that the components A) + B) + C) add up to 100 we.%, the demulsifying oligomers CNP' are prepared by radical polymerisation and the molecular weight (M_{w}) is between 1,000 and 300,000 g/mol, as demulsifiers for hydraulic fluids based on mineral oil.

3. Use of the cooligomers or copolymers CNP according to claim 1 as demulsifiers in applied concentrations in the range from 50 to 1,000 ppm.

4. Use of the cooligomers or copolymers CNP' according to claim 2 as demulsifiers in applied concentrations in the range from 50 to 1,000 ppm.

## Revendications

1. Utilisation de co-oligomères ou copolymères poly[(méth)acrylate d'alkyle], les co-oligomères ou copolymères CNP étant constitués de
A) 10 à 95 % en poids d'ester d'acide (méth)acrylique de formule I 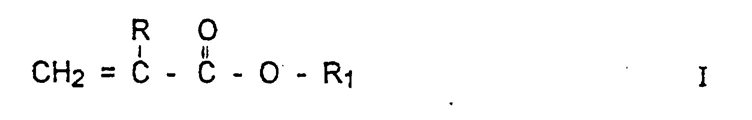 dans laquelle
R représente un atome d'hydrogène ou le groupe méthyle et
R₁ représente un radical alkyle éventuellement ramifié, ayant de 1 à 32 atomes de carbone,
B) 5 à 90 % en poids d'ester d'acide (méth)acrylique de formule II 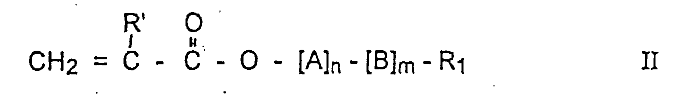 dans laquelle R' représente un atome d'hydrogène ou le groupe méthyle et
A et B sont choisis dans l'ensemble constitué par
a) - CH₂CH₂ - O - ; b) 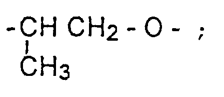
c) 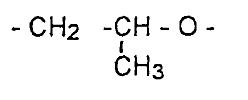 étant entendu que n + m représente un nombre allant de 3 à 200 et que la somme n + m pour chaque membre de groupe individuel a), b) ou c) n'excède pas 100,
et R₁ représente un radical alkyle éventuellement ramifié, un radical cycloalkyle, un radical aryle ou un radical aralkyle ayant de 1 à 50 atomes de carbone,
C) 0 à 40 % en poids d'un 1-alcène ayant de 4 à 32 atomes de carbone, les composants A), B) et C) se complétant à 100 % en poids, les oligomères (CNP) à action désémulsifiante étant préparés par polymérisation radicalaire et la masse moléculaire (Mₚ) étant comprise entre 1 000 et 300 000 g/mole,
en tant que désémulsifiants pour fluides hydrauliques à base d'huiles minérales.

2. Utilisation de co-oligomères ou copolymères CNP qui sont constitués de
A) 10 à moins de 60 % en poids d'ester d'acide (méth)acrylique de formule I 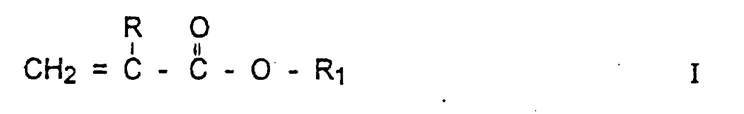 dans laquelle
R représente un atome d'hydrogène ou le groupe méthyle et R₁ représente un radical alkyle éventuellement ramifié, ayant de 1 à 32 atomes de carbone,
B) plus de 40 à 90 % en poids d'ester d'acide (méth)acrylique de formule II 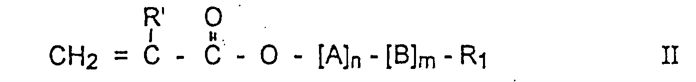 dans laquelle R'représente un atome d'hydrogène ou le groupe méthyle et
A et B sont choisis dans l'ensemble constitué par
a) - CH₂CH₂ - O - ; b) 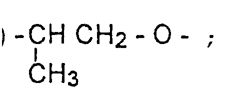
c) 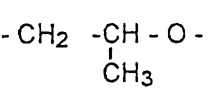 étant entendu que n + m représente un nombre allant de 3 à 200 et que la somme n + m pour chaque membre de groupe individuel a), b) ou c) n'excède pas 100, et R₁ représente un radical alkyle éventuellement ramifié, un radical cycloalkyle, un radical aryle ou un radical aralkyle ayant de 1 à 50 atomes de carbone,
C) 0 à moins de 20 % en poids d'un 1-alcène ayant de 4 à 32 atomes de carbone,
étant entendu que les composants A) + B) + C) se complètent à 100 % en poids, les oligomères CNP' à action désémulsifiante sont préparés par polymérisation radicalaire et la masse moléculaire (Mₚ) est comprise entre 1 000 et 300 000 g/mole,
en tant que désémulsifiants pour des fluides hydrauliques à base d'huiles minérales.

3. Utilisation des co-oligomères ou copolymères CNP selon la revendication 1, en tant que désémulsifiants à des concentrations d'utilisation dans la plage de 50 à 1 000 ppm.

4. Utilisation des co-oligomères ou copolymères CNP' selon la revendication 2, en tant que désémulsifiants à des concentrations d'application dans la plage de 50 à 1 000 ppm.
